# EUROPÄISCHE PATENTSCHRIFT

(11) **EP 1 648 730 B1**
(45) Veröffentlichungstag und Bekanntmachung des Hinweises auf die Patenterteilung: **19.03.2008**
(21) Anmeldenummer: 04741168.1
(22) Anmeldetag: 17.07.2004
(51) Int. Cl.: B60K 23/08, B60K 17/35

(54) **STEUERVORRICHTUNG FÜR EIN ZUMINDEST ZEITWEISE VIERRADGETRIEBENES KRAFTFAHRZEUG**
CONTROL DEVICE FOR AN AT LEAST PARTIALLY FOUR-WHEEL DRIVEN MOTOR VEHICLE
DISPOSITIF DE COMMANDE POUR VEHICULE AUTOMOBILE A QUATRE ROUES MOTRICES AU MOINS DE FAÇON INTERMITTENTE

(30) Priorität: 24.07.2003 DE 10333655
(43) Veröffentlichungstag der Anmeldung: 26.04.2006
(73) Patentinhaber: Bayerische Motoren Werke Aktiengesellschaft, 80809 München (DE)
(72) Erfinder: BILLIG, Christian, 80939 München (DE)
(86) Internationale Anmeldenummer: PCT/EP2004/008093
(87) Internationale Veröffentlichungsnummer: WO 2005/009774

(56) Entgegenhaltungen:
- EP-A- 1 188 597
- EP-A- 1 270 305
- EP-A- 1 400 389
- DE-A- 10 060 642
- US-A- 5 101 315
- US-A- 5 899 951
- PATENT ABSTRACTS OF JAPAN Bd. 0180, Nr. 72 (M-1555), 7. Februar 1994 (1994-02-07) & JP 05 286376 A (JAPAN ELECTRON CONTROL SYST CO LTD), 2. November 1993 (1993-11-02)

## Beschreibung

Die Erfindung bezieht sich auf eine Steuervorrichtung für ein zumindest zeitweise vierradgetriebenes Kraftfahrzeug nach dem Oberbegriff des Patentanspruchs 1.

Eine derartige Steuervorrichtung ist beispielsweise in der EP-A-1 270 305 beschrieben. Hierbei wird eine Drehmomentverteilungseinrichtung zum Verändern des Drehmomentverteilungsverhältnisses abhängig von einem über die Kupplungsmomente abgeleiteten Belastungsgrad angesteuert.

Bekannt ist beispielsweise auch aus der DE 100 54 023 A1, eine Drehmomentverteilungseinrichtung zum Verändern des Drehmomentverteilungsverhältnisses zwischen den Rädern der Vorderachse und den Rädern der Hinterachse durch entsprechende Steuerung einer Reibungskupplung als Längssperre (Übertragungskupplung). Durch die Festlegung eines Drehmomentverteilungsverhältnisses kann das Fahrverhalten eines Fahrzeuges erheblich beeinflusst werden. Der Gegenstand der DE 100 54 023 A1 beschäftigt sich dabei insbesondere mit der Fahrdynamik bei Kurvenfahrt. Hierbei kann ein zeitweise vierradgetriebenes Kraftfahrzeug ein grundsätzlich vorderradangetriebenes Kraftfahrzeug mit über eine Übertragungskupplung zuschaltbarem Hinterradantrieb, ein grundsätzlich hinterradangetriebenes Kraftfahrzeug mit über eine Übertragungskupplung zuschaltbarem Vorderradantrieb oder ein Permanent-Allradfahrzeug mit regelbarer Übertragungskupplung zur Änderung der Drehmomentverteilung zwischen Vorder- und Hinterachse sein.

Im Folgenden werden diesbezüglich verallgemeinernd als primäre Antriebsräder die permanent mit der Antriebseinheit verbundenen Räder und als sekundäre Antriebsräder die über die Übertragungskupplung bedarfsweise mit der Antriebseinheit verbindbaren Räder bezeichnet.

Weiterhin weisen derartige bekannte Steuersysteme meist eine Steuerung der Übertragungskupplung in Abhängigkeit von der Drehzahldifferenz zwischen einer Drehzahl der primären Antriebsachse und der Drehzahl der sekundären Antriebsachse auf (z. B. DE 34 27725 C2). Zum weiteren technischen Hintergrund wird auf die US 5,899,951 und die EP-A-1 400 389, die zum stand der Technik gemäβ Artikel 5413) EPÜ gehört, hingewiesen.

Es ist Aufgabe der Erfindung, ein Steuersystem eingangs genannter Art im Hinblick auf die Verfügbarkeit der Übertragungskupplung und/oder der Aktuatorvorrichtung zur Steuerung der Übertragungskupplung zu verbessern.

Diese Aufgabe wird durch die Merkmale des Patentanspruchs 1 gelöst. Vorteilhafte Weiterbildungen sind die Gegenstände der abhängigen Patentansprüche.

Der Erfindung liegt die Erkenntnis zugrunde, dass sich u. a. mit dem Ziel einer Erhöhung der Verfügbarkeit der Übertragungskupplung und/oder der Aktuatorvorrichtung bei der Ermittlung des Soll-Kupplungsmoments teilweise widersprüchliche Anforderungen ergeben. Diese unterschiedlichen Anforderungen spiegeln sich zunächst innnerhalb der Steuereinheit in unterschiedlichen Zwischen-Soll-Kupplungmomenten wieder, die zum Erhalt eines endgültigen, tatsächlich einzustellenden Soll-Kupplungsmoments koordiniert werden müssen. Gegenstand der vorliegenden Erfindung ist daher insbesondere eine Momentenkoordination in Form einer Priorisierungsstruktur unterschiedlicher Zwischen-Soll-Kupplungsmomente, die auch fahrdynamische Anforderungen nicht unberücksichtig lassen.

In der Zeichnung ist ein Ausführungsbeispiel der Erfindung dargestellt. Es zeigt
- Fig. 1: schematisch ein zeitweise vierradgetriebenes Fahrzeug mit einer über eine Steuereinheit einstellbaren Übertragungskupplung am Beispiel eines grundsätzlich hinterradangetriebenen Kraftfahrzeugs mit über eine Übertragungskupplung zuschaltbarem Vorderradantrieb
- Fig. 2: Ausschnitte aus der Steuereinheit

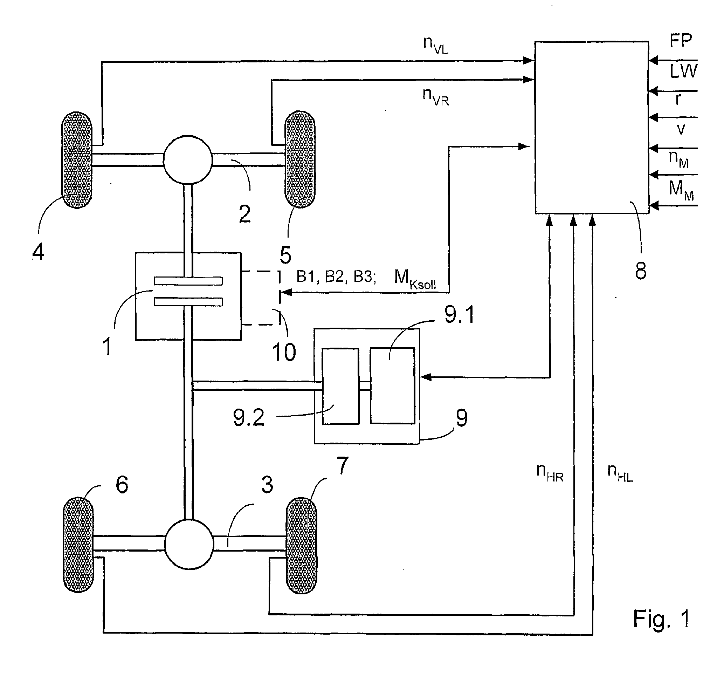

In Figur 1 ist ein zeitweise vierradgetriebenes Fahrzeug in Form eines grundsätzlich hinterradangetriebenen Kraftfahrzeugs mit bedarfsweise über eine Übertragungskupplung 1 zuschaltbarem Vorderradantrieb dargestellt. Die Übertragungskupplung 1 ist über eine Steuereinheit 8 einstellbar. Die Steuereinheit 8 kann ein ausgelagertes, z.B. in der Nähe oder direkt an der Übertragungskupplung 1 angebrachtes Zusatzsteuergerät 10 enthalten, das beispielsweise das vorgegebene Soll-Kupplungsmoment in elektrischen Strom zur Ansteuerung der Verstelleinheit (hier nicht dargestellt) der Übertragungskupplung 1 umsetzt. Die Steuereinheit 8 muss jedoch nicht in zwei Teilsteuergeräte aufgeteilt sein.

Bei einem Fahrzeug nach Fig. 1 wird mit offener Übertragungskupplung 1 das gesamte Drehmoment (Antriebsmoment) der Antriebseinheit 9 auf die Räder 6 und 7 der Hinterachse 3 übertragen. Vorzugsweise besteht die Antriebseinheit 9 aus einer Brennkraftmaschine 9.1, einem Getriebe 9.2 und mindestens einem Antriebssteuergerät (hier nicht näher dargestellt). Das Antriebssteuergerät kommuniziert beispielsweise über den bekannten Kfz.-Datenbus CAN mit der Steuereinheit 8. In Fig. 1 sind die Hinterräder 6 und 7 die primären Antriebsräder, da sie permanent mit der Antriebseinheit 9 verbunden sind. Mit zunehmendem Kupplungsmoment an der Übertragungskupplung 1 treibt die Antriebseinheit 9 auch die Räder 4 und 5 der Vorderachse 2 an. Somit sind die Vorderräder 4 und 5 die sekundären Antriebsräder.

Die Steuereinheit 8 erfasst oder ermittelt zu weiteren Eingangssignalen hinzu insbesondere die Stellung des Fahrpedals FP, den Lenkwinkel LW, die Gierwinkelgeschwindigkeit r, die Raddrehzahlen n_{VL}, n_{HL}, n_{VR}, n_{HR} aller Räder 4, 5, 6, 7, die Brennkraftmaschinendrehzahl n_{M}, das Brennkraftmaschinenmoment M_{M}, sowie die Fahrzeuggeschwindigkeit v.

Zur Verteilung des Antriebsmoments der Antriebseinheit 9 wird ein einzustellendes Kupplungsmoment M_{Ksoll} für die zwischen der Antriebseinheit 9 bzw. den primären Antriebsrädern 6 und 7 und den sekundären Antriebsrädern 4 und 5 angeordneten Übertragungskupplung 1 vorgegeben. Vorzugsweise gibt die Steuereinheit 8 das Soll-Kupplungsmoment M_{Ksoll} an das Zusatzsteuergerät 10 aus. Das Zusatzsteuergerät 10 setzt das Soll-Kupplungsmoment M_{Ksoll} in einen Strom zur Ansteuerung der hier nicht eigens dargestellten Aktuatorvorrichtung um.

Die Steuereinheit 8 erfasst im Falle der Aufteilung in zwei Teilsteuereinheiten vorzugsweise vom Zusatzsteuergerät 10 oder ermittelt selbst abhängig von entsprechenden Eingangssignalen den Belastungsgrad der Aktuatorvorrichtung bzw. der Übertragungskupplung 1. Hierbei wird vorzugsweise zwischen dem Langzeit-Belastungsgrad B3 der Öl-Lamellen der Übertragungskupplung 1, dem Kurzzeit-Belastungsgrad B2 der Öl-Lamellen der Übertragungskupplung 1 und dem Belastungsgrad B1 des Aktuators unterschieden. Der Aktuator ist vorzugsweise ein Elektromotor, der ein Schneckengetriebe zum Öffnen und Schließen der Öl-Lamellen bewegt. Ein Belastungsgrad kann ein absoluter oder relativer Wert sein, der insbesondere aufgrund der Erfassung von Reibungsverlusten, Schädigungskennlinien oder Temperaturverläufen ermittelt wird.

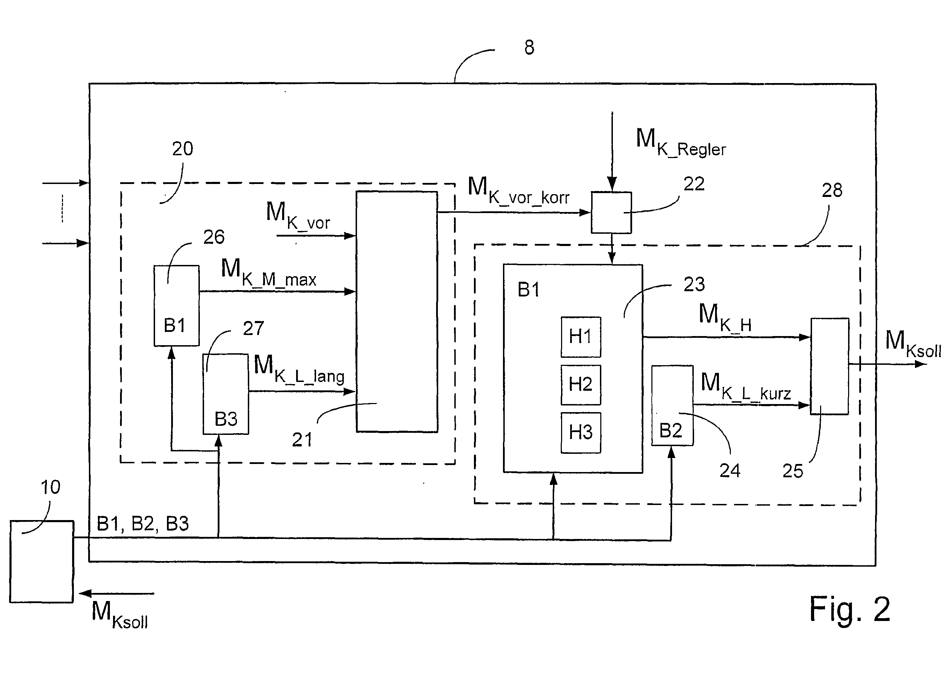

In Fig. 2 sind weitere Details der Steuereinheit 8 gezeigt.

In der Steuereinheit 8 wird mittels der Reglereinheit 1 unter Berücksichtigung von Radschlupf und fahrdynamischen Größen, wie Übersteuern und Untersteuern, ein fahrdynamischer Regelanteil M_{K_Regler} für die Bestimmung des Soll-Kupplungsmoments M_{Ksoll} ermittelt. In einer (hier nicht näher dargestellten) Vorsteuereinheit wird abhängig von ermittelten Eingangssignalen, die insbesondere auf den Fahrerwunsch schließen lassen, ein Grundvorsteueranteil M_{K_vor} ermittelt und vorzugsweise an einen Vorsteuerkoordinator 21 ausgegeben.

In einem Langzeit-Schutzblock 27 wird der Langzeit-Belastungsgrad B3 der Übertragungskupplung 1 berücksichtigt. Vom Langzeit-Schutzblock 27 wird ein maximal zulässiges Kupplungsmoment M_{K_L_lang} vorgegeben, wenn der Langzeit-Belastungsgrad B3 größer als eine vorgegebene Schwelle ist. Hierbei kann der Langzeit-Belastungsgrad B3 z. B. durch eine ermittelte sogenannte Schädigung durch Reibverluste gekennzeichnet sein. Vorzugsweise wird das maximal zulässige Kupplungsmoment M_{K_L_lang} auch nur dann vorgegeben, wenn eine der Außentemperatur proportionale Größe größer als eine vorgegebene Temperaturschwelle ist. Dieser erfindungsgemäßen Ausgestaltung der Erfindung liegt die Erkenntnis zugrunde, dass bei Lanzeitbelastung eine hohe Außentemperatur die mechanische Belastung der Übertragungskupplung 1 zusätzlich erhöht. Auch das maximal zulässige Kupplungsmoment M_{K_L_lang} wird vorzugsweise an den Vorsteuerkoordinator 21 ausgegeben.

Durch den Aktuator-Schutzblock 26 ist grundsätzlich bei steigendem Belastungsgrad B1 der Aktuatorvorrichtung bzw. des Elektromotors zur Reduzierung des Haltestrom der Aktuatorvorrichtung ein aktuatorbezogenes Begrenzungsmoment M_{K_M_max} vorgebbar. Auch können abhängig vom Überschreiten mehrerer definierter Belastungsgradschwellen mehrere aktuatorbezogene Begrenzungsmomente M_{K_M_max} vorgegeben werden. Auch das aktuatorbezogene Begrenzungsmoment M_{K_M_max} wird vorzugsweise an den Vorsteuerkoordinator 21 ausgegeben.

Der Vorsteuerkoordinator 21 nimmt vorzugsweise eine Minimalauswahl aus den vorliegenden Eingangssignalen vor insbesondere wird bei Vorgabe eines maximal zulässigen Kupplungsmoments M_{K_L_lang} und eines aktuatorbezogenen Begrenzungsmoments M_{K_M_max} das kleinere der beiden Momente ausgewählt. Liegt jedoch ein höherer Grundvorsteueranteil M_{K_vor} vor, kann alternativ das aktuatorbezogene Begrenzungsmoment M_{K_M_max} auch höher priorisiert werden als das maximal zulässige Kupplungsmoment M_{K_L_lang}, da Langzeitauswirkungen eher niedriger priorisierbar sind als Kurzzeitauswirkungen. Anstelle einer Minimalauswahl kann also alternativ auch das aktuatorbezogene Begrenzungsmoment M_{K_M_max} höher priorisiert werden als das maximal zulässige Kupplungsmoment M_{K_L_lang}.

Das Ausgangsmoment M_{K_vor_korr} des Vorsteuerkoordinators 21 ist ein korrigierten Grundvorsteueranteil, in dem also zumindest der Belastungsgrad B1 des Aktuators im Hinblick auf eine ggf. erforderliche Reduzierung des Haltestroms und der Langzeit-Belastungsgrad B3 der Öl-Lamellen der Übertragungskupplung 1 berücksichtigt sind.

Im Addierer 22 findet die Summierung des Ausgangsmoments M_{K_vor_korr} des Vorsteuerkoordinators 21 mit dem fahrdynamischer Regelanteil M_{K_Regler} statt. Das Ausgangssignal des Addierers 22 ist Eingangssignal einer Hystereseeinheit 23, durch die mit steigendem Belastungsgrad B1 des Aktuators bzw. des Elektromotors zur Reduzierung der Verstellhäufigkeit der Aktuatorvorrichtung die Hysteresebänder aufgeweitet werden. Im dargestellten konkreten Ausführungsbeispiel sind hierzu in der Hystereseeinheit 23 drei unterschiedliche Hysteresebänder abgelegt. Ein relativ enges Hystereseband H1 wird bis zum Erreichen einer ersten Belastungsgradschwelle, ein mittleres Hysteresband H2 wird bis zum Erreichen einer zweiten Belastungsgradschwelle, und ein relativ breites Hysteresband H3 wird ab Überschreiten der zweiten Belastungsgradschwelle ausgewählt. Insgesamt wird dadurch also allgemein mit steigendem Belastungsgrad B1 der Aktuatorvorrichtung das Soll-Kupplungsmoments M_{Ksoll} derart ermittelt, dass die Verstellhäufigkeit der Aktuatorvorrichtung reduziert wird.

Das Ausgangssignal der Hystereseeinheit 23 ist Eingangssignal der Ausgabeeinheit 25. In der Ausgabeeinheit 25 wird eine Maximalauswahl zwischen dem dem Ausgangssignal der Hystereseeinheit 23 zugrundeliegenden Moment M_{K_H} und einem auf der Berücksichtigung des Kurzzeit-Belastungsgrades B2 der Übertragungskupplung 1 basierenden minimal notwendigen Kupplungsmoment M_{K_L_kurz} vorgenommen. Das minimal notwendige Kupplungsmoment M_{K_L_kurz} wird vorzugsweise von einem Kurzzeit-Schutzblock 24 dann vorgegeben, wenn der Kurzzeit-Belastungsgrad B2 größer als eine vorgegebene Schwelle ist.

In der Ausgabeeinheit 25 wird also das tatsächlich einzustellende Soll-Kupplungsmoment M_{Ksoll} nach einer Steuereinheit-internen Momentenkoordination unterschiedlicher Zwischen-Soll-Kupplungsmomente endgültig bestimmt und vorzugsweise an das Zusatzsteuergerät 10 ausgegeben.

Durch das in Fig. 2 dargestellte besonders vorteilhafte Ausführungsbeispiel wird ff. Priorisierungsstruktur hinsichtlich der Berücksichtigung des Belastungsgrades B1 des Aktuators, des Kurzzeit-Belastungsgrades B2 der Übertragungskupplung 1 und des Langzeit-Belastungsgrades B3 der Übertragungskupplung erreicht:

Die Vorgabe des minimal notwendigen Kupplungsmoments M_{K_L_kurz} basierend auf der Berücksichtigung des Kurzzeit-Belastungsgrades B2 wird gegenüber der Vorgabe eines maximal zulässigen Kupplungsmoments M_{K_L_ lang} basierend auf der Berücksichtigung des Langzeit-Belastungsgrades B3 höher priorisiert.

Die Vorgabe des minimal notwendigen Kupplungsmoments M_{K_L_kurz} basierend auf der Berücksichtigung des Kurzzeit-Belastungsgrades B2 der Übertragungskupplung 1 wird gegenüber einer Vorgabe eines aktuatorbezogenen Begrenzungsmoments M_{K_M_max} basierend auf der Berücksichtigung des Belastungsgrades B1 der Aktuatorvorrichtung höher priorisiert.

Die Vorgabe eines aktuatorbezogenen Begrenzungsmoments M_{K_M_max} basierend auf der Berücksichtigung des Belastungsgrades B1 der Aktuatorvorrichtung zur Reduzierung des Haltestroms wird gegenüber einer Vorgabe eines maximal zulässigen Kupplungsmoments M_{K_L_lang} basierend auf der Berücksichtigung des Langzeit-Belastungsgrades B3 der Übertragungskupplung 1 höher priorisiert. Alternativ kann bei Vorgabe eines aktuatorbezogenen Begrenzungsmoments M_{K_M_max} basierend auf der Berücksichtigung des Belastungsgrades B1 der Aktuatorvorrichtung zur Reduzierung des Haltestroms und bei Vorgabe eines maximal zulässigen Kupplungsmoments M_{K_L_lang} eine Minimalauswahl getroffen werden.

Es sind jedoch auch andere Ausgestaltungen von Regler- und Berechnungsblöcken denkbar, durch die dieselbe Priorisierungsstruktur erreicht werden kann.

Insgesamt ergibt sich erfindungsgemäß ff. Priorisierungsliste beginnend mit der höchsten Priorität:
1. Berücksichtigung des Kurzzeit-Belastungsgrades B2 der Übertragungskupplung 1 im Hinblick auf ein möglichst schnelles Schließen zum Verhindern von Schlupf.
2. Berücksichtigung des Belastungsgrades B1 des Aktuators im Hinblick auf eine Reduzierung der Verstellhäufigkeit zum Schutz vor Überhitzung.
3. Berücksichtigung des Belastungsgrades B1 des Aktuators im Hinblick auf eine Reduzierung des Haltestroms zum Schutz vor Überhitzung.
4. Berücksichtigung des Langzeit-Belastungsgrades B3 der Übertragungskupplung 1 im Hinblick auf ein möglichst schnelles Öffnen zum Verhindern von Verlustleistung.
5. alternativ zu 3. und 4.: Minimalauswahl bei Berücksichtigung des Belastungsgrades B1 des Aktuators im Hinblick auf eine Reduzierung des Haltestroms und Berücksichtigung des Langzeit-Belastungsgrades B3 der Übertragungskupplung 1.

## Patentansprüche

1. Steuervorrichtung für ein zumindest zeitweise vierradgetriebenes Kraftfahrzeug mit einer Steuereinheit, mittels der das Antriebsmoment einer Antriebseinheit auf primäre Antriebsräder, die permanent mit der Antriebseinheit verbunden sind, und auf sekundäre Antriebsräder, die bedarfsweise über eine Übertragungskupplung mit der Antriebseinheit verbindbar sind, variabel verteilbar ist, indem die Steuereinheit ein Soii-Kupplungsmoments ermittelt, das mittels einer Aktuatorvorrichtung an der Übertragungskupplung einzustellen ist, wobei die Steuereinheit (8; 8,10) derart ausgestaltet ist, dass bei der Ermittlung des Soll-Kupplungsmoments (M_{Ksoll}) ein Kurzzeit-Belastungsgrad (B2) der Übertragungskupplung (1) berücksichtigt wird, wobei ein steigender Kurzzeit-Belastungsgrad (B2) momenterhöhend wirkt, **dadurch gekennzeichnet, dass** bei der Ermittlung des Soll-Kupplungsmoments (M_{Ksoll}) auch ein Langzeit-Belastungsgrad (B3) der Übertragungskupplung (1) berücksichtigt wird, wobei ein steigender Langzeit-Belastungsgrad (B3) bei der Ermittlung des Soll-Kupplungsmoments (M_{Ksoll}) momentreduzierend wirkt, und wobei die Berücksichtigung des Kurzzeit-Belastungsgrades (B2) höher priorisiert wird als die Berücksichtigung des Langzeit-Belastungsgrades (B3).

2. Steuervorrichtung nach Patentanspruch 1, **dadurch gekennzeichnet, dass** bei der Ermittlung des Soll-Kupplungsmoments (M_{Ksoll}) auch ein Belastungsgrad (B1) der Aktuatorvorrichtung berücksichtigt wird.

3. Steuervorrichtung nach Patentanspruch 1 oder 2, **dadurch gekennzeichnet, dass** ein Kurzzeit-Belastungsgrad (B2) der Übertragungskupplung (1) berücksichtigt wird, und dass bei der Ermittlung des Soll-Kupplungsmoments (M_{Ksoll}) ein minimal notwendiges Kupplungsmoment (M_{K_L_kurz}) vorgegeben wird, wenn der Kurzzeit-Belastungsgrad (B2) größer als eine vorgegebene Schwelle ist.

4. Steuervorrichtung nach einem der Patentansprüche 1 bis 3, **dadurch gekennzeichnet, dass** ein Langzeit-Belastungsgrad (B3) der Übertragungskupplung (1) berücksichtigt wird, und dass bei der Ermittlung des Soll-Kupplungsmoments (M_{Ksoll}) ein maximal zulässiges Kupplungsmoment (M_{K_L_lang}) vorgegeben wird, wenn der Langzeit-Belastungsgrad (B3) größer als eine vorgegebene Schwelle ist.

5. Steuervorrichtung nach Patentanspruch 4, **dadurch gekennzeichnet, dass** das maximal zulässige Kupplungsmoment (M_{K_L_lang}) nur dann vorgegeben wird, wenn eine der Außentemperatur proportionale Größe größer als eine vorgegebene Temperaturschwelle ist.

6. Steuervorrichtung nach einem der Patentansprüche 1 bis 5, **dadurch gekennzeichnet, dass** die Vorgabe eines minimal notwendigen Kupplungsmoments (M_{K_L_kurz}) basierend auf der Berücksichtigung des Kurzzeit-Belastungsgrades (B2) gegenüber der Vorgabe eines maximal zulässigen Kupplungsmoments (M_{K_L_lang}) basierend auf der Berücksichtigung des Langzeit-Belastungsgrades (B3) höher priorisiert wird.

7. Steuervorrichtung nach einem der Patentansprüche 2 bis 6, **dadurch gekennzeichnet, dass** mit steigendem Belastungsgrad (B1) der Aktuatorvorrichtung das Soll-Kupplungsmoments (M_{Ksoll}) derart ermittelt wird, dass die Verstellhäufigkeit der Aktuatorvorrichtung reduziert wird.

8. Steuervorrichtung nach Patentanspruch 7, **dadurch gekennzeichnet, dass** vor der Ausgabe des Soll-Kupplungsmoments (M_{Ksoll}) eine Hystereseeinheit (23) vorgesehen ist und dass mit steigendem Belastungsgrad (B1) zur Reduzierung der Verstellhäufigkeit der Aktuatorvorrichtung die Hysteresebänder aufgeweitet werden.

9. Steuervorrichtung nach einem der Patentansprüche 2 bis 8, **dadurch gekennzeichnet, dass** mit steigendem Belastungsgrad (B1) der Aktuatorvorrichtung das Soll-Kupplungsmoments (M_{Ksoll}) derart ermittelt wird, dass der Haltestrom der Aktuatorvorrichtung durch Vorgabe eines aktuatorbezogenen Begrenzungsmoments (M_{K_M_max}) reduzierbar ist.

10. Steuervorrichtung nach einem der Patentansprüche 2 bis 9, **dadurch gekennzeichnet, dass** bei der Ermittlung des Soll-Kupplungsmoments (M_{Ksoll}) eine Vorgabe eines minimal notwendigen Kupplungsmoments (M_{K_L_kurz}) basierend auf der Berücksichtigung des Belastungsgrades insbesondere Kurzzeit-Belastungsgrades (B2) der Übertragungskupplung (1) gegenüber einer Vorgabe eines aktuatorbezogenen Begrenzungsmoments (M_{K_M_max}) basierend auf der Berücksichtigung des Belastungsgrades (B1) der Aktuatorvorrichtung höher priorisiert wird.

11. Steuervorrichtung nach einem der Patentansprüche 2 bis 10, **dadurch gekennzeichnet, dass** bei der Ermittlung des Soll-Kupplungsmoments (M_{Ksoll}) eine Vorgabe eines aktuatorbezogenen Begrenzungsmoments (M_{K_M_max}) basierend auf der Berücksichtigung des Belastungsgrades (B1) der Aktuatorvorrichtung gegenüber einer Vorgabe eines maximal zulässigen Kupplungsmoments (M_{K_L_lang}) basierend auf der Berücksichtigung des Belastungsgrades insbesondere Langzeit-Belastungsgrades (B3) der Übertragungskupplung (1) höher priorisiert wird.

## Claims

1. A control device for an at least temporarily four-wheel drive motor vehicle with a control unit, which can variably distribute the drive torque of a drive unit to primary drive wheels, which are permanently connected to the drive unit, and to secondary drive wheels which, if required, can be connected via a transfer clutch to the drive unit, in that the control unit determines a desired clutch torque, which is to be adjusted by means of an actuator device at the transfer clutch, the control unit (8; 8, 10) being configured in such a way that on determination of the desired clutch torque (M_{K} desired), a short term degree (82) of loading of the transfer clutch (1) is taken into account, an increasing short term degree (82) of loading acting in a torque-increasing manner, **characterised in that** when determining the desired clutch torque (M_{K desired}) a long term degree (83) of loading of the transfer clutch (1) is also taken into account, wherein an increasing long term degree (B3) of loading acts in a torque-reducing manner during the determination of the desired clutch torque (M_{K} desired), and wherein taking into account the short term degree (82) of loading is given higher priority than taking into account the long term degree (83) of loading.

2. A control device according to claim 1, **characterised in that** when determining the desired clutch torque (M_{K desired}), a degree (B1) of loading of the actuator device is also taken into account.

3. A control device according to claim 1 or 2, **characterised in that** a short term degree of loading (82) of the transfer clutch (1) is taken into account, and **in that** when determining the desired clutch torque (M_{K} desired), a minimally required clutch torque (M_{K_L_short}) is specified if the short term degree (82) of loading is greater than a specified threshold.

4. A control device according to any one of claims 1 to 3, **characterised in that** a long term degree (83) of loading of the transfer clutch (1) is taken into account, and **in that** when the desired clutch torque (M_{K} desired) is determined, a maximally permissible clutch torque (M_{K_L_long}) is specified if the long term degree (B3) of loading is greater than a specified threshold.

5. A control device according to claim 4, **characterised in that** the maximally permissible clutch torque (M_{K_L_long}) is only specified if a variable proportional to the external temperature is greater than a specified temperature threshold.

6. A control device according to any one of claims 1 to 5, **characterised in that** the input of a minimally required clutch torque (M_{K_L_short}) based on taking into account the short term degree (B2) of loading is given higher priority than the input of a maximally permissible clutch torque (M_{K_L_long}) based on taking into account the long term degree (B3) of loading.

7. A control device according to any one of claims 2 to 6, **characterised in that** as the degree (B1) of loading of the actuator device increases, the desired clutch torque (M_{K} desired) is determined in such a way that the adjustment frequency of the actuator device is reduced.

8. A control device according to claim 7, **characterised in that** before the output of the desired clutch torque (M_{K} desired) a hysteresis unit (23) is provided and **in that**, as the degree (B1) of loading increases, the hysteresis bands are expanded to reduce the adjustment frequency of the actuator device.

9. A control device according to any one of claims 2 to 8, **characterised in that,** as the degree (B1) of loading of the actuator device increases, the desired clutch torque (M_{K} desired) is determined in such a way that the holding current of the actuator device can be reduced by inputting an actuator-related limit torque (M_{K_M_max}).

10. A control device according to any one of claims 2 to 9, **characterised in that** when the desired clutch torque (M_{K desired}) is determined, an input of a minimally required clutch torque (M_{K_L_short}) based on taking into account the degree of loading, more especially short term degree (B2) of loading, of the transfer clutch (1) is given a higher priority compared to inputting an actuator-related limit torque (M_{K_M_max}) based on taking into account the degree (B1) of loading of the actuator device.

11. A control device according to any one of claims 2 to 10, **characterised in that** when the desired clutch torque (M_{K} desired) is determined, an input of an actuator-related limit torque (M_{K_M_max}) based on taking into account the degree (B1) of loading of the actuator device is given a higher priority than inputting a maximally permissible clutch torque (M_{K_L_long}) based on taking into account the degree of loading, more especially long term degree (B3) of loading, of the transfer clutch (1).

## Revendications

1. Dispositif de commande d'un véhicule à quatre roues au moins motrices par intermittence, comportant une unité de commande permettant de répartir de manière variable le couple d'entraînement d'une unité d'entraînement ou roues motrices primaires reliée en permanence à l'unité d'entraînement et aux roues motrices secondaires reliées à l'unité d'entraînement le cas échéant par un embrayage de coupure, l'unité de commande déterminant un couple d'embrayage de consigne réglé par un dispositif d'actionneur sur l'embrayage de coupure,
l'unité de commande (8 ; 8, 10) étant réalisée pour qu'en déterminant le couple d'embrayage de consigne (M_{Kcons}) on tient compte d'un de gré de charge à court terme (B2) de l'embrayage de coupure (1),
et lorsque le degré de charge à court terme (B2) augmente, on augmente le couple,
**caractérisé en ce qu'**
en déterminant le couple d'embrayage de consigne (M_{Kcons}) on tient également compte du degré de charge à long terme (B3) de l'embrayage de coupure (1),
un degré de charge à long terme (B3) croissant se traduisant par une réduction du couple lorsqu'on détermine le couple d'embrayage de consigne (M_{Kcons}), et
la prise en compte du degré de charge à court terme (B2) a une priorité plus élevée que la prise en compte du degré de charge à long terme (B3).

2. Dispositif de commande selon la revendication 1,
**caractérisé en ce qu'**
en déterminant le couple d'embrayage de consigne (M_{Kcons}) on tient également compte du degré de charge (B1) du dispositif d'actionneur.

3. Dispositif de commande selon la revendication 1 ou 2,
**caractérisé en ce qu'**
on tient compte du degré de charge à court terme (B2) de l'embrayage de coupure (1), et
en déterminant le couple d'embrayage de consigne (M_{Kcons}) on prédéfinit un couple d'embrayage nécessaire minimum (M_{K-L-bref}) si le degré de charge à court terme (B2) est supérieur à un seuil prédéfini.

4. Dispositif de commande selon l'une des revendications 1 à 3,
**caractérisé en ce qu'**
on tient compte d'un degré de charge à long terme (B3) de l'embrayage de coupure (1), et pour déterminer le couple d'embrayage de consigne (M_{Kcons}) on prédéfinit un couple d'embrayage maximum autorisé (M_{K-L-long}) si le degré de charge à long terme (B3) est supérieur à un seuil prédéfini.

5. Dispositif de commande selon la revendication 4,
**caractérisé en ce qu'**
on prédéfinit le couple d'embrayage maximum autorisé (M_{K-L-long}) seulement si une grandeur proportionnelle à la température extérieure est supérieure à un seuil de température prédéfini.

6. Dispositif de commande selon l'une des revendications 1 à 5,
**caractérisé en ce que**
la prédéfinition d'un couple d'embrayage minimum nécessaire (M_{K_L_bref}) fondé sur la prise en compte du degré de charge à court terme (B2) par rapport à la prédéfinition d'un couple d'embrayage maximum autorisé (M_{K-L-long}) fondé sur la prise en compte du degré de charge à long terme (B3) a une priorité plus élevée.

7. Dispositif de commande selon l'une des revendications 2 à 6,
**caractérisé en ce qu'**
avec le degré de charge croissant (B1) le dispositif d'actionneur détermine le couple d'embrayage de consigne (M_{Kcons}) de façon à réduire la fréquence d'actionnement du dispositif d'actionneur.

8. Dispositif de commande selon la revendication 7,
**caractérisé en ce qu'**
avant d'émettre le couple d'embrayage de consigne (M_{Kcons}) on prévoit une unité à hystérésis (23) et avec la croissance du degré de charge (B1) on réduit la fréquence d'actionnement du dispositif d'actionneur en élargissant les bandes d'hystérésis.

9. Dispositif de commande selon l'une des revendications 2 à 8,
**caractérisé en ce qu'**
avec le degré de charge (B1) croissant, le dispositif d'actionneur détermine le couple d'embrayage de consigne (M_{Kcons}) de façon à réduire le courant de maintien du dispositif d'actionneur en prédéfinissant un couple limite rapporté à l'actionneur (M_{K-M-max}).

10. Dispositif de commande selon l'une des revendications 2 à 9,
**caractérisé en ce qu'**
en déterminant le couple d'embrayage de consigne (M_{Kcons}), une prédéfinition d'un couple d'embrayage minimum nécessaire (M_{K-L-bref}) fondé sur la prise en compte du degré de charge, notamment du degré de charge à court terme (B2) de l'embrayage de coupure (1), a une priorité plus élevée qu'une prédéfinition d'un couple limite (M_{K-M-max}) rapporté à l'actionneur, fondé sur la prise en compte du degré de charge (B1) du dispositif d'actionneur.

11. Dispositif de commande selon l'une des revendications 2 à 10,
**caractérisé en ce qu'**
en déterminant le couple d'embrayage de consigne (M_{Kcons}), une prédéfinition d'un couple limite rapporté à l'actionneur (M_{K-M-max}) fondé sur la prise en compte du degré de charge (B1) du dispositif d'actionneur, a une priorité plus élevée qu'une prédéfinition d'un couple d'embrayage maximum autorisé (M_{K-L-long}) fondé sur la prise en compte du degré de charge, notamment du degré de charge à long terme (B3) de l'embrayage de coupure (1).
